# EUROPEAN PATENT APPLICATION

(11) **EP 2 781 300 A2**
(43) Date of publication of application: **24.09.2014**
(21) Application number: 14159921.7
(22) Date of filing: 14.03.2014
(51) Int. Cl.: B23P 21/00

(54) **Workpiece assembly line and method for producing workpiece**

(30) Priority: 19.03.2013 JP 2013056822
(71) Applicant: Kabushiki Kaisha Yaskawa Denki, Kitakyushu-shi, Fukuoka 806-0004 (JP)
(72) Inventor: Harada, Toshiyuki, Kitakyushu-shi, Fukuoka 806-0004 (JP); Ikeda, Toshiaki, Kitakyushu-shi, Fukuoka 806-0004 (JP); Okawa, Ken, Kitakyushu-shi, Fukuoka 806-0004 (JP); Ogasawara, Shinji, Kitakyushu-shi, Fukuoka 806-0004 (JP); Shiota, Akihiro, Kitakyushu-shi, Fukuoka 806-0004 (JP)
(74) Representative: Viering, Jentschura & Partner Patent- und Rechtsanwälte

(57) **Abstract**

A workpiece assembly line (1) includes assembly units (10, 12, 14, 16, 18) that assemble a workpiece (W), and a workpiece transfer unit (5) that allows transfer of the workpiece (W) between the workpiece transfer unit (5) and each assembly unit (10, 12, 14, 16, 18). The assembly units (10, 12, 14, 16, 18) are disposed around the workpiece transfer unit (5). The workpiece (W) is transferred between the assembly units (10, 12, 14, 16, 18) via the workpiece transfer unit (5).

## Description

### BACKGROUND OF THE INVENTION

### 1. Field of the Invention

The embodiments disclosed herein relate to a workpiece assembly line and a method for producing a workpiece.

### 2. Description of the Related Art

For example, an assembly line that is discussed in Japanese Unexamined Patent Application Publication No. 2002-370679 is known as an existing assembly line. The assembly line discussed in this document includes a plurality of articulated robots. When an unsuitable condition occurs in one of the articulated robots, the other articulated robots that operate in coordination with this articulated robot operate to eliminate the unsuitable condition.

In a workpiece assembly line, it is demanded that tact time be reduced. In order to reduce the tact time, it is necessary to increase operation speed of a robot that is operating. However, when only the operation speed of the robot is increased, the reduction in the tact time is limited. Therefore, in order to reduce the tact time, it is necessary to improve coordination between steps.

### SUMMARY OF THE INVENTION

Accordingly, it is an object of the disclosure to provide a workpiece assembly line and a method for producing a workpiece, which can reduce tact time.

According to an aspect of the disclosure, there is provided a workpiece assembly line that assembles a workpiece. The workpiece assembly line includes assembly units that assemble the workpiece, and a transfer section that allows transfer of the workpiece between the transfer section and each assembly unit. The assembly units are disposed around the transfer section. The workpiece is transferred between the assembly units via the transfer section.

According to another aspect of the disclosure, there is provided a method for producing a workpiece by the above-described assembly line.

According to the present disclosure, it is possible to reduce tact time.

### BRIEF DESCRIPTION OF THE DRAWINGS

Fig. 1 is a schematic view of a workpiece assembly line according to an embodiment.
Fig. 2 illustrates an example of a workpiece transfer unit.
Fig. 3 is a flowchart of a method for producing a workpiece in the workpiece assembly line.

### DESCRIPTION OF THE EMBODIMENTS

Preferred embodiments of the present disclosure are hereunder described in detail with reference to the attached drawings. In describing the drawings, the same or corresponding components are given the same reference numerals, and the same descriptions are not repeated.

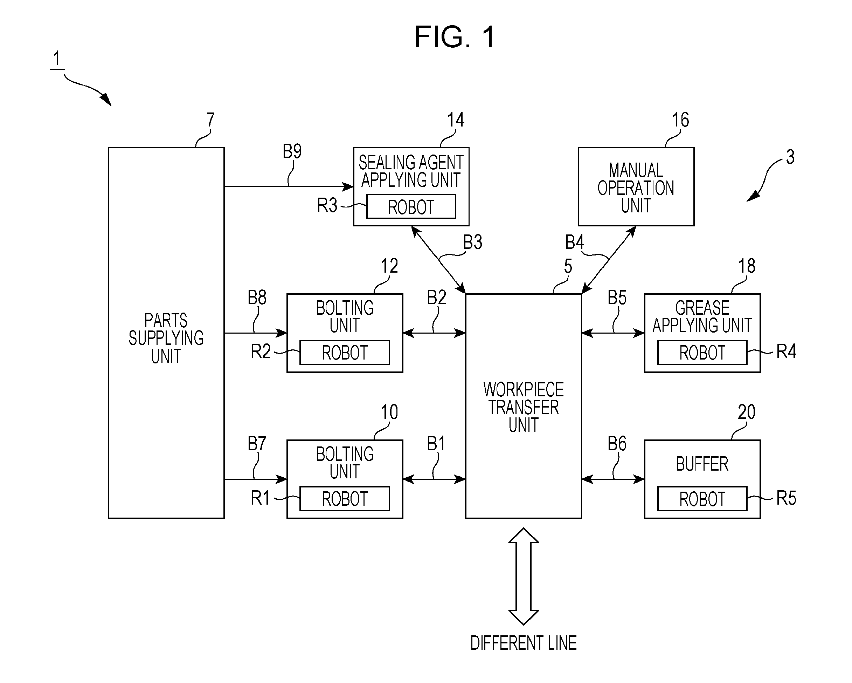

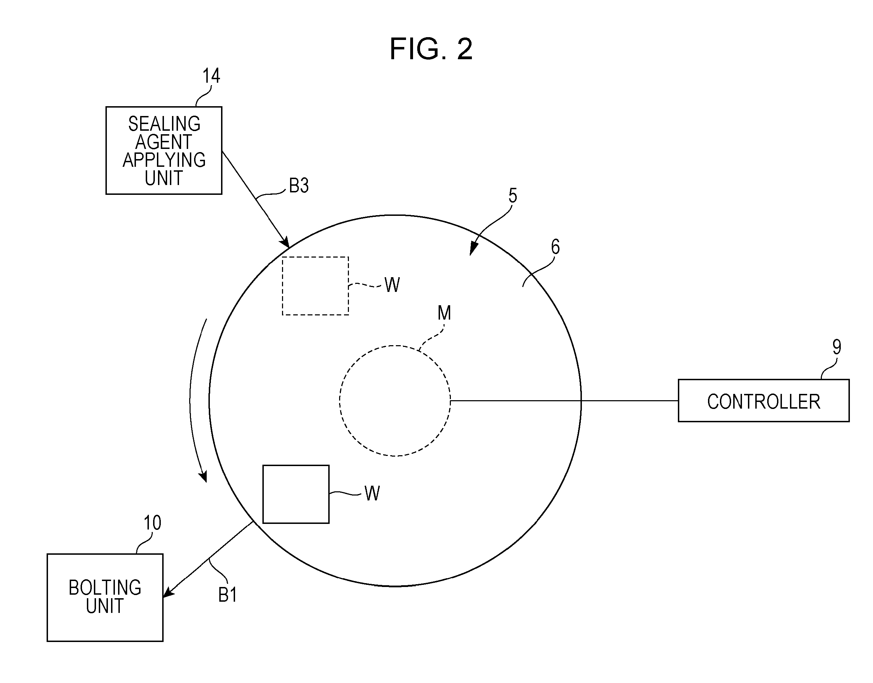

Fig. 1 is a schematic view of a workpiece assembly line 1 according to an embodiment. The workpiece assembly line 1 illustrated in Fig. 1 corresponds to, for example, part of a robot assembly line that assembles a robot. In the workpiece assembly line 1, a workpiece W (see Fig. 2), which is a structural component of the robot, is assembled. The workpiece W is, for example, a link (arm) or a joint, which forms part of the robot.

As illustrated in Fig. 1, the workpiece assembly line 1 includes a workpiece assembly unit 3, a workpiece transfer unit (transfer section) 5, a parts supply unit 7, and a controller 9 (see Fig. 2).

The workpiece assembly unit 3 includes bolting units 10 and 12, a sealing agent applying unit 14, a manual operation unit 16, a grease applying unit 18, and a buffer 20. Each of the units 10, 12, 14, 16, 18, and 20 is disposed around the workpiece transfer unit 5.

The bolting units 10 and 12 install bolts (not shown) to a workpiece W. The bolting units 10 and 12 include, respectively, robots R1 and R2 that fasten the bolts at the workpiece W. The bolting unit 10 and the workpiece transfer unit 5 are connected to each other by a conveyor B1 that allows the workpiece W to be transferred between the bolting unit 10 and the workpiece transfer unit 5. The bolting unit 12 and the workpiece transfer unit 5 are connected to each other by a conveyor B2 that allows the workpiece W to be transferred between the bolting unit 12 and the workpiece transfer unit 5. When the bolting units 10 and 12 receive the workpiece W from the workpiece transfer unit 5 via the corresponding conveyors B1 and B2, the robots R1 and R2 fasten the bolts at the workpiece W. When the bolting units 10 and 12 complete the fastening of the bolts at the workpiece W, the bolting units 10 and 12 transport out and transfer the workpiece W to the workpiece transfer unit 5 via the corresponding conveyors B1 and B2.

The sealing agent applying unit 14 applies a sealing agent (not shown) to the workpiece W. The sealing agent applying unit 14 includes a robot R3 that applies the sealing agent to the workpiece W. The sealing agent applying unit 14 and the workpiece transfer unit 5 are connected to each other by a conveyor B3 that allows the workpiece W to be transferred between the sealing agent applying unit 14 and the workpiece transfer unit 5. When the sealing agent applying unit 14 receives the workpiece W from the workpiece transfer unit 5 via the conveyor B3, the robot R3 applies the sealing agent to the workpiece W. When the sealing agent applying unit 14 completes the application of the sealing agent to the workpiece W, the sealing agent applying unit 14 transports out and transfers the workpiece W to the workpiece transfer unit 5 via the conveyor B3.

The manual operation unit 16 performs, for example, wiring of the workpiece W by a manual operation. In the manual operation unit 16, for example, the workpiece W is wired by an operator. The manual operation unit 16 and the workpiece transfer unit 5 are connected to each other by a conveyor B4 that allows transfer of the workpiece W between the manual operation unit 16 and the workpiece transfer unit 5. When the manual operation unit 16 receives the workpiece W from the workpiece transfer unit 5 via the conveyor B4,
the operator wires the workpiece W. When the manual operation unit 16 completes the wiring of the workpiece W, the manual operation unit 16 transports out and transfers the workpiece W to the workpiece transfer unit 5 via the conveyor B4.

The grease applying unit 18 applies grease (not shown) to the workpiece W. The grease applying unit 18 includes a robot R4 that applies the grease to the workpiece W. The grease applying unit 18 and the workpiece transfer unit 5 are connected to each other by a conveyor B5 that allows transfer of the workpiece W between the grease applying unit 18 and the workpiece transfer unit 5. When the grease applying unit 18 receives the workpiece W from the workpiece transfer unit 5 via the conveyor B5, the robot R4 applies the grease to the workpiece W. When the grease applying unit 18 completes the application of the grease to the workpiece W, the grease applying unit 18 transports out and transfers the workpiece W to the workpiece transfer unit 5 via the conveyor B5.

The buffer 20 is a portion that temporarily holds the workpiece W. The buffer 20 has a region where the workpiece W is placed (held). The buffer 20 may include a robot R5 that transfers the workpiece W between a conveyor B6 and the buffer 20. The buffer 20 and the workpiece transfer unit 5 are connected to each other by the conveyor B6 that allows transfer of the workpiece W between the buffer 20 and the workpiece transfer unit 5. When the buffer 20 receives the workpiece W from the workpiece transfer unit 5 via the conveyor B6, the buffer 20 temporarily holds the workpiece W. When the buffer 20 receives a command from the controller 9, the buffer 20 transfers the workpiece W to the workpiece transfer unit 5 via the conveyor B6.

The workpiece transfer unit 5 is formed so that the workpiece W can be transferred between it and each of the units 10, 12, 14, 16, 18, and 20. The workpiece transfer unit 5 may include, for example, a robot that is capable of gripping the workpiece W, and the workpiece W may be transferred between the workpiece transfer unit 5 and each of the conveyors B1 to B6 via the robot. Any method may be used to transfer the workpiece W between the workpiece transfer unit 5 and each of the conveyors B1 to B6.

Fig. 2 illustrates an example of a workpiece transfer unit. As illustrated in Fig. 2, the workpiece transfer unit 5 is, for example, a rotary table having a substantially circular shape. The workpiece transfer unit 5 includes a base 6 where the workpiece W is placed (that is, where the workpiece W is supported) and a motor M that rotates the base 6. The controller 9 controls the rotation of the motor M. In the workpiece transfer unit 5, the base 6 is rotated and the workpiece W is positioned in front of each of the conveyors B1 to B6.

The parts supplying unit 7 supplies a part (structural member) that forms the workpiece W to each of the units 10, 12, and 14. Here, a bolt and a sealing agent are called "parts". The parts supplying unit 7 and the bolting unit 10 are connected to each other by a conveyor B7 that allows transfer of a part between the parts supplying unit 7 and the bolting unit 10. The parts supplying unit 7 and the bolting unit 12 are connected to each other by a conveyor B8 that allows transfer of a part between the parts supplying unit 7 and the bolting unit 12. The bolting units 10 and 12 receive bolts from the parts supplying unit 7 via the corresponding conveyors B7 and B8.

The parts supplying unit 7 and the sealing agent applying unit 14 are connected to each other by a conveyor B9 that allows transfer of a part between the parts supplying unit 7 and the sealing agent applying unit 14. The sealing agent applying unit 14 receives a sealing agent from the parts supplying unit 7 via the conveyor B9. The parts supplying unit 7 supplies parts to the units 10, 12, 14, for example, on demand from the units 10, 12, and 14, or periodically.

The controller 9 controls the operations of the robots R1 to R5 of the corresponding units 10, 12, 14, 18, and 20, the operations of the conveyors B1 to B9, and the rotation of the motor M. An operation command to the controller 9 is output from a higher-order controller. The controller 9 includes, for example, a central processing unit (CPU), read only memory (ROM), random access memory (RAM), and a hard disc, which are not illustrated.

The controller 9 successively obtains an operation state (state of progress of operation) of each of the robots R1 to R5, and, in accordance with the states of operations of the robots R1 to R5, controls the conveyors B1 to B9 and the motor M of the workpiece transfer unit 5.

More specifically, when, for example, the robot R3 of the sealing agent applying unit 14 completes the application of the sealing agent to the workpiece W, the controller 9 controls the conveyor B3 so that the conveyor B3 transports the workpiece W to the workpiece transfer unit 5. When the workpiece transfer unit 5 receives the transferred workpiece W via the conveyor B3, the controller 9 rotates the base 6 of the workpiece transfer unit 5 by controlling the motor M, and positions the workpiece W in front of the conveyor B1. The controller 9 controls the conveyor B1 so that the conveyor B1 transports the workpiece W to the bolting unit 10.

As illustrated in Fig. 1, in the workpiece assembly line 1 according to the embodiment, the bolting unit 10, the bolting unit 12, the sealing agent applying unit 14, the manual operation unit 16, the grease applying unit 18, and the buffer 20 are disposed in that order in a substantially U shape so as to surround the workpiece transfer unit 5.

The manual operation unit 16 is disposed between the sealing agent applying unit 14 and the grease applying unit 18. The manual operation unit 16 does not include a robot. As described above, an operator performs wiring.

The bolting unit 10, the bolting unit 12, the sealing agent applying unit 14, and the grease applying unit 18 perform operations using the corresponding robots R1 to R4. At this time, since the operations of the robot R1 of the bolting unit 10 and the robot R2 of the bolting unit 12 are easier than those of the robot R3 of the sealing agent applying unit 14 and the robot R4 of the grease applying unit 18, the operation speeds of the robot R1 of the bolting unit 10 and the robot R2 of the bolting unit 12 are set higher than those of the robot R3 of the sealing agent applying unit 14 and the robot R4 of the grease applying unit 18. In other words, the operation speed of the robot R3 of the sealing agent applying unit 14 and the operation speed of the robot R4 of the grease applying unit 18 are lower than the operation speed of the robot R1 of the bolting unit 10 and the operation speed of the robot R2 of the bolting unit 12. Therefore, in the embodiment, from the viewpoint of ensuring the safety of an operator, the manual operation unit 16 is disposed between the sealing agent applying unit 14 and the grease applying unit 18 including their corresponding robots R3 and R4 having relatively low operation speeds. This restricts contact of the operator with the robots R3 and R4.

An enclosing member (not shown) may be disposed around the robots R1 to R5. The enclosing member is a member for restricting contact of an object with the robots R1 to R5. The enclosing member is disposed around, for example, a robot including a motor of 80 W or higher. The enclosing member may be disposed around a working area of the manual operation unit 16. By disposing the enclosing member, it is possible to restrict contact of an object including an operator with the robots R1 to R5.

The bolting unit 10, the bolting unit 12, and the sealing agent applying unit 14 are disposed side by side. These units 10, 12, and 14 are units for supplying parts thereto. By disposing together the units 10, 12, and 14 for supplying parts thereto, it is possible to minimize the lengths of the conveyors B7 to B9 that connect the parts supplying unit 5 and their corresponding units 10, 12, and 14 to each other. Therefore, it is possible to reduce transport time of the workpiece W and to save space in the workpiece assembly line 1.

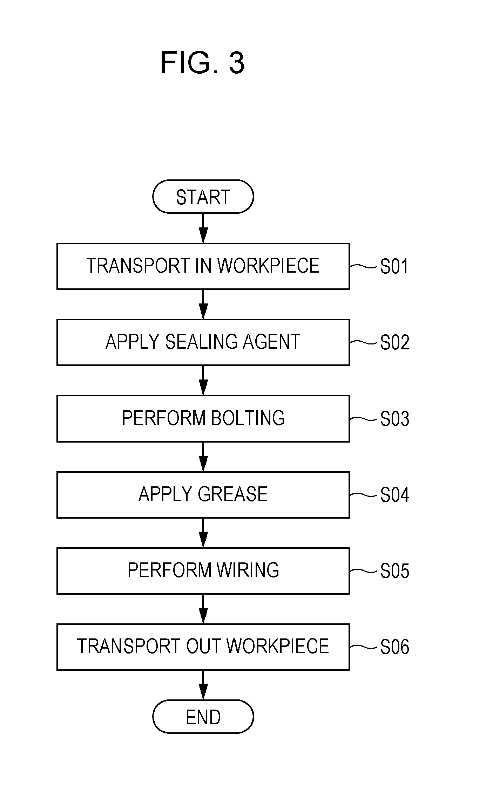

Next, a method for producing a workpiece by the workpiece assembly line 1 is described. Fig. 3 is a flowchart of the method for producing a workpiece. The workpiece assembly line 1 usually handles a plurality of workpieces W. However, the workpiece assembly line 1 is hereunder described as handling one workpiece W.

As illustrated in Fig. 3, first, the workpiece W to be assembled is transported onto the workpiece transfer unit 5 of the workpiece assembly line 1 (Step S01). Next, the workpiece transfer unit 5 transfers the workpiece W to the sealing agent applying unit 14 via the conveyor B3 (Step S02).

Next, in the sealing agent applying unit 14 that has received the workpiece W, the robot R3 applies a sealing agent to the workpiece W (Step S03). When the application of the sealing agent is completed, the sealing agent applying unit 14 transfers the workpiece W to the workpiece transfer unit 5 via the conveyor B3.

Next, the workpiece transfer unit 5 that has received the workpiece W from the sealing agent applying unit 14 transfers the workpiece W to, for example, the bolting unit 10 via the conveyor B1. In the bolting unit 10 that has received the workpiece W, the robot R1 fastens a bolt at the workpiece W (Step S03). When the fastening of the bolt is completed, the bolting unit 10 transfers the workpiece W to the workpiece transfer unit 5 via the conveyor B1.

Next, the workpiece transfer unit 5 that has received the workpiece W from the bolting unit 10 transfers the workpiece W to the grease applying unit 18 via the conveyor B5. In the grease applying unit 18 that has received the workpiece W, the robot R4 applies grease to the workpiece W (Step S04). When the application of the grease is completed, the grease applying unit 18 transfers the workpiece W to the workpiece transfer unit 5 via the conveyor B5.

Next, the workpiece transfer unit 5 that has received the workpiece W from the grease applying unit 18 transfers the workpiece W to the manual operation unit 16 via the conveyor B4. At the manual operation unit 16 that has received the workpiece W, an operator wires the workpiece W using, for example, a wire (Step S05). When the wiring is completed, the manual operation unit 16 transfers the workpiece W to the workpiece transfer unit 5 via the conveyor B4.

Lastly, the workpiece transfer unit 5 that has received the workpiece W from the manual operation unit 16 transports out the workpiece W to a different line (Step S06) .

As described above, the workpiece assembly line 1 according to the embodiment includes the workpiece transfer unit 5 that is formed so that the workpiece W can be transferred between it and each of the units 10, 12, 14, 16, 18, and 20. The units 10, 12, 14, 16, 18, and 20 are disposed around the workpiece transfer unit 5. By such a structure, the workpiece W is transferred between the units 10, 12, 14, 16, 18, and 20 via the workpiece transfer unit 5. This makes it possible to efficiently transfer a plurality of workpieces W to and from each of the units 10, 12, 14, 16, 18, and 20 by the workpiece transfer unit 5 in the workpiece assembly line 1.

Therefore, in the workpiece assembly line 1, it is possible to improve coordination between the units 10, 12, 14, 16, and 18, and to perform operations at the same time at the units 10, 12, 14, 16, and 18. Consequently, in the workpiece assembly line 1, it is possible to reduce tact time. Although not illustrated, operation rates of tools used by the robots R1 to R4 of the corresponding units 10, 12, 14, and 18 can be increased. Specific examples of tools include nut runners used by the robots R1 and R2 at their corresponding bolting units 10 and 12, and a sealing agent applying tool used by the robot R3 at the sealing agent applying unit 14.

In the workpiece assembly line 1 according to the embodiment, the workpiece transfer unit 5 includes the rotary base 6. This makes it possible for the workpiece transfer unit 5 to quickly and precisely transfer the workpiece W between it and each of the units 10, 12, 14, 16, 18, and 20 disposed around the workpiece transfer unit 5.

The workpiece assembly line 1 according to the embodiment includes two bolting units, that is, the bolting units 10 and 12. In the workpiece assembly line 1 according to the embodiment, it takes the longest time to fasten the bolts at the workpiece W. Therefore, in the workpiece assembly line 1, the burden of the bolting operation is shared between the two bolting units 10 and 12. Consequently, it is possible to match the tact time for the bolting operation with the tact time for the operations of the other units 14, 16, and 18.

The present disclosure is not limited to the above-described embodiment. In the above-described embodiment, the workpiece W is transferred by connecting the workpiece transfer unit 5 and the units 10, 12, 14, 16, 18, and 20 to each other using the corresponding conveyors B1 to B6. However, the workpiece W may be transferred therebetween by a different method. For example, the workpiece W may be transferred therebetween by robots disposed between the workpiece transfer unit 5 and the corresponding units 10, 12, 14, 16, 18, and 20.

In the above-described embodiment, the structure including the base 6 allowing the workpiece transfer unit 5 to be rotatably provided is described as an example. However, the workpiece transfer unit 5 may have a different structure. The workpiece transfer unit may simply be a base that supports the workpiece W.

In the above-described embodiment, the workpiece assembly unit 3 including the bolting units 10 and 12, the sealing agent applying unit 14, the manual operation unit 16, the grease applying unit 18, and the buffer 20 is described as an example. However, the workpiece assembly unit 3 may include, for example, a unit including a robot that applies an adhesive and a unit including a robot that applies solder. The number of assembling units that is set may be set as appropriate in accordance with the steps performed for the workpiece.

In the above-described embodiment, the workpiece assembly line 1 is described as being part of a robot assembly line, and the workpiece W is described as being a robot part. However, the workpiece W may be something other than a robot part.

## Claims

1. A workpiece assembly line (1) that assembles a workpiece (W), comprising:
a plurality of assembly units that assemble the workpiece (W); and
a transfer section (5) that allows transfer of the workpiece (W) between the transfer section (5) and each assembly unit,
wherein the plurality of assembly units are disposed around the transfer section (5), and
wherein the workpiece (W) is transferred between the assembly units via the transfer section (5).

2. The workpiece assembly line (1) according to Claim 1, wherein the transfer section includes a base where the workpiece is placed, and
wherein the base is rotatably provided.

3. The workpiece assembly line (1) according to either Claim 1 or Claim 2, further comprising a supply unit (7) that supplies a structural member of the workpiece, the supply unit (7) being provided for some of the plurality of assembly units,
wherein the some of the plurality of assembly units to which the structural member is supplied from the supply unit are disposed side by side.

4. The workpiece assembly line (1) according to any one of Claims 1 to 3, wherein some of the plurality of assembly units each include a robot that assembles the workpiece, and
wherein, of the assembly units including the corresponding robots, the assembly unit including the robot whose operation speed is lower than an operation speed of the other robot or operation speeds of the other robots is disposed side by side with the assembly unit that does not include the robot or the assembly units that do not include the corresponding robots.

5. The workpiece assembly line (1) according to Claim 4, wherein the robots are surrounded by an enclosing member.

6. The workpiece assembly line (1) according to either Claim 4 or Claim 5, wherein a working area at the assembly unit that does not include the robot or working areas at the assembly units that do not include the robots are surrounded by an enclosing member.

7. A method for producing a workpiece, wherein the workpiece is produced by the assembly line (1) according to any one of Claims 1 to 6.
